# EUROPEAN PATENT APPLICATION

(11) **EP 2 348 760 A1**
(43) Date of publication of application: **27.07.2011**
(21) Application number: 09818666.1
(22) Date of filing: 16.11.2009
(51) Int. Cl.: H04W 4/02, H04W 4/24

(54) **METHOD, SYSTEM AND DEVICE FOR IMPLEMENTING SUBAREA SERVICE**

(71) Applicant: Huawei Technologies Co., Ltd., Guangdong 518129 (CN)
(72) Inventor: ZHOU, Wen, Shenzhen Guangdong 518129 (CN); ZHANG, Wenhu, Shenzhen Guangdong 518129 (CN)
(74) Representative: Körber, Martin Hans
(86) International application number: PCT/CN2009/074927
(87) International publication number: WO 2011/057445

(57) **Abstract**

A method for implementing a cell distribution service comprising: acquiring, by a Subscriber Identity Module (SIM) card, information on a current servicing cell; judging, by the SIM card, whether the current servicing cell is in a preferential area list stored in the SIM card; and instructing a terminal to display a preference mark, if it is judged that the current servicing cell is in the preferential area list. The invention further provides a system and corresponding apparatus for implementing a cell distribution service. The SIM card of the invention can instruct the terminal to display corresponding preference mark when the subscriber enters or leaves a preferential area.

## Description

### Field of the Invention

The present invention relates to the field of communications technology, and particularly, to a method, a system, and an apparatus for implementing a cell distribution service.

### Background

The cell distribution service is a conventional service in mobile communications, in which a preference is offered to a subscriber who initiates or answers a phone call within a designated location range. The subscriber's preferential area is usually composed of a number of cells. A related art (related art 1) is to store information on the subscriber's preferential area in a cell distribution service server in the network, and to provide an alert such as voice to the subscriber when the subscriber initiates a call. Another related art (related art 2) is to store information on the subscriber's preferential area in a dedicated terminal, and to display a preference mark on the terminal when the subscriber enters the preferential area.

The related art 1 has the following defect: It is impossible for the cell distribution service server in the network to provide a preference mark in a timely manner when the subscriber enters of leaves the preferential area, and on the other hand. The related art 2 has the following defect: A preference mark can be displayed on the terminal when the subscriber enters or leaves the preferential area because the information on the subscriber's preferential area is stored in the terminal. But the subscriber has to use a dedicated terminal. Therefore, the related art 2 has limitations and inconveniences.

### Summary of the Invention

The different aspects of the present invention provide a method, a system, and an apparatus for implementing a cell distribution service, which make it possible to instruct a terminal to display a preference mark when a subscriber enters into a preferential area.

An embodiment of the invention provides a method for implementing a cell distribution service. The method includes: acquiring, by a Subscriber Identity Module (SIM) card, information on a current servicing cell; judging, by the SIM card, whether the current servicing cell is in a preferential area list stored in the SIM card; and instructing a terminal to display a preference mark if it is judged that the current servicing cell is in the preferential area list.

Another embodiment of the invention further provides a method for implementing a cell distribution service. The method includes: receiving an instruction of displaying a preference mark sent by an SIM card, where the instruction is sent after the SIM card acquires information on a current servicing cell and judges that the current servicing cell is in a preferential area list stored in the SIM card; and displaying the preference mark according to the instruction.

Another embodiment of the invention further provides a method for implementing a cell distribution service. The method includes: acquiring a preferential area list; and sending the preferential area list to an SIM card through an SIM card short message, so that the SIM card instructs a terminal to display a preference mark after acquiring information on a current servicing cell and judging that the current servicing cell is in the preferential area list.

Another embodiment of the invention further provides an apparatus for implementing a cell distribution service. The apparatus includes: an acquiring unit adapted to acquire information on a preferential area list; a judging unit adapted to judge whether the current servicing cell is in a preferential area list stored in an SIM card; and an instructing unit adapted to instruct a terminal to display a preference mark when it is judged that the current servicing cell is in the preferential area list.

Another embodiment of the invention further provides a terminal. The terminal includes: a receiving unit adapted to receive an instruction of displaying preference mark sent by an SIM card, where the instruction is sent after the SIM card acquires information on a current servicing cell and judges that the current servicing cell is in a preferential area list stored in the SIM card; and a displaying unit adapted to display the preference mark according to the instruction.

Another embodiment of the invention further provides a cell distribution service server. The cell distribution service server includes: an acquiring unit adapted to acquire a preferential area list; and a sending unit adapted to send the preferential area list to an SIM card through an SIM card short message, so that the SIM card instructs a terminal to display a preference mark after acquiring information on a current servicing cell and judging that the current servicing cell is in the preferential area list.

Another embodiment of the invention further provides a system for implementing a cell distribution service. The system includes: an apparatus for implementing a cell distribution service and a terminal connected to the apparatus. The apparatus for implementing a cell distribution service is adapted to acquire information on a current servicing cell, judge whether the current servicing cell is in a preferential area list stored in an SIM card, and if so, instruct the terminal to display a preference mark; and the terminal is adapted to display the preference mark according to the instruction from the apparatus for implementing a cell distribution service.

In the method, system, and apparatus for implementing a divisional service provided by the embodiments of the invention, the SIM card stores a preferential area list. When the SIM card acquires information on a current servicing cell, the SIM card can judge whether the current servicing cell is in the preferential area list, and instructs a terminal to display a preference mark. In the embodiments of the present invention, the terminal can provide a preference mark, and a dedicated terminal is not required, therefore the embodiments of the present invention have many advantages such as wide applicability, low costs and simple structure.

### Brief Description of the Drawings

Fig. 1 is a flowchart of a method for implementing a cell distribution service according to an embodiment of the present invention;
Fig. 2 illustrates a flow of registering a preferential area according to an embodiment of the present invention;
Fig. 3 illustrates a flow of automatically updating a preferential area according to an embodiment of the present invention;
Fig. 4 illustrates a flow of power-on process according to an embodiment of the present invention;
Fig. 5 illustrates a flow of process when a subscriber is moving according to an embodiment of the present invention;
Fig. 6 illustrates a flow of another process when a subscriber is moving according to an embodiment of the present invention;
Fig. 7 is a flowchart of a method for implementing a cell distribution service according to an embodiment of the present invention;
Fig. 8 is a schematic diagram of a cell distribution service server according to an embodiment of the present invention;
Fig. 9 is a flowchart of a method for implementing a cell distribution service according to an embodiment of the present invention;
Fig. 10 is a schematic diagram of a terminal according to an embodiment of the present invention;
Fig. 11 is a schematic diagram of an apparatus for implementing a cell distribution service according to an embodiment of the present invention;
Fig. 12 is a schematic diagram of a system for implementing a cell distribution service according to an embodiment of the present invention.

### Detailed Description of the Embodiments

The embodiments of the present invention provide a method, a system, and an apparatus for implementing a cell distribution service, where an SIM card can instruct a terminal to display a corresponding preference mark when a subscriber enters a preferential area. To clarify the object, technical solutions and advantages of the present invention, the following sections describe the present invention in detail with reference to the drawings.

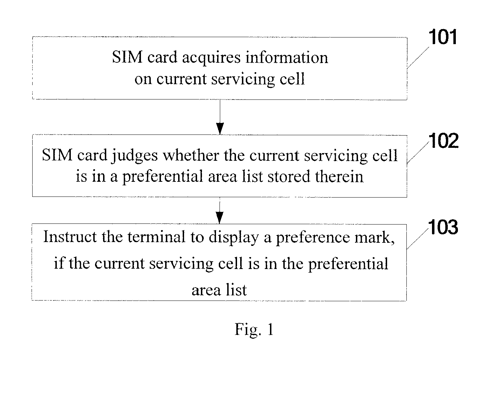

Fig. 1 is a flowchart of a method for implementing a cell distribution service according to an embodiment of the present invention. The method includes steps as follows:
Step 101: An SIM card acquires information on a current servicing cell.

Specifically, a terminal may send the information on a current servicing cell to the SIM card when a handover occurs in the current servicing cell of the terminal, or the SIM card may periodically send a request to the terminal for the information on a current servicing cell, or alternatively the information on a current servicing cell may be sent to the SIM card when the terminal registers on a network.

Step 102: The SIM card judges whether the current servicing cell is in a preferential area list stored in the SIM card.

Specifically, when the information on the current servicing cell of the terminal is acquired by the SIM card, the SIM card judges whether the current servicing cell is in the preferential area list by using the preferential area list stored locally.

The preferential area list is carried in an SIM card short message which contains a preferential area list and is sent by the cell distribution service server via the terminal.

To be noted, there may be one or more pieces of SIM card short message, which are a special kind of short messages having a Data Coding Scheme (DCS) of Class 2 Message, That is, the binary value of the TP-Data-Coding-Scheme field is 00X1 XX10, where X indicates 0 or 1. The cell distribution service server may send information on the preferential area list to the SIM card of the terminal through the SIM card short message.

Step 103: If the current servicing cell is in the preferential area list stored in the SIM card, the terminal is instructed to display a preference mark.

Further, the method for implementing a cell distribution service according to an embodiment of the invention may further include steps as follows:

The SIM card interacts with the terminal to acquire a profile of the terminal, and if it is judged from the profile that the terminal is capable of setting an event list, the SIM card may instruct the terminal to notify the SIM card when the information on the current servicing cell is changed.

Because a preferential area list is stored in the SIM card, the SIM card can instruct the terminal to display a preference mark by judging that the current servicing cell is in the preferential area list, whenever the information on the current servicing cell is acquired. Therefore, the terminal according to the embodiment of the invention can provide a preference mark without a dedicated terminal.

The following sections describe several specific application examples, in which the cell distribution service server is exemplified as a Service Control Point (SCP). The cell distribution service server in the examples can be implemented not only by an SCP, but also by other network equipments such as an Application Server (AS) of an IP Multimedia Subsystem (IMS), or an Interactive Voice Response (IVR) platform.

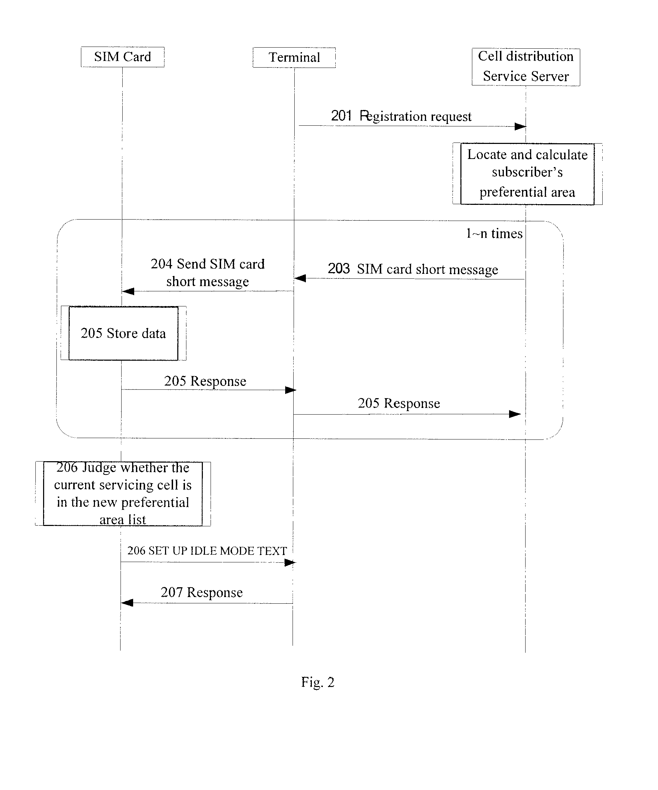

Fig. 2 is a flow of registering a preferential area according to an embodiment of the present invention, which includes steps as follows:
Step 201: A subscriber sends a request for registering a preferential area to a cell distribution service server (e.g., an SCP), by dialing an access code of an IVR voice flow, sending a short message (SM) or Unstructured Supplementary Service Data (USSD), and so on.
Step 202: The cell distribution service server completes a location and calculation of the subscriber's preferential area according to the request for registering a preferential area, and obtains a preferential area list for the subscriber.
Step 203: The cell distribution service server sends the preferential area list to the terminal through an SIM card short message.
Step 204: The terminal receives the SIM card short message and forwards the SIM card short message to the SIM card.
Step 205: The SIM card stores the preferential area list, and sends a response message to the cell distribution service server via the terminal.
Step 206: The SIM card acquires information on the current servicing cell, and judges whether the current servicing cell is in the preferential area list, if so, the SIM card sends a SET UP IDLE MODE TEXT command to instruct the terminal to display a preference mark.
Step 207: The terminal displays the preference mark, and returns a response message to the SIM card.

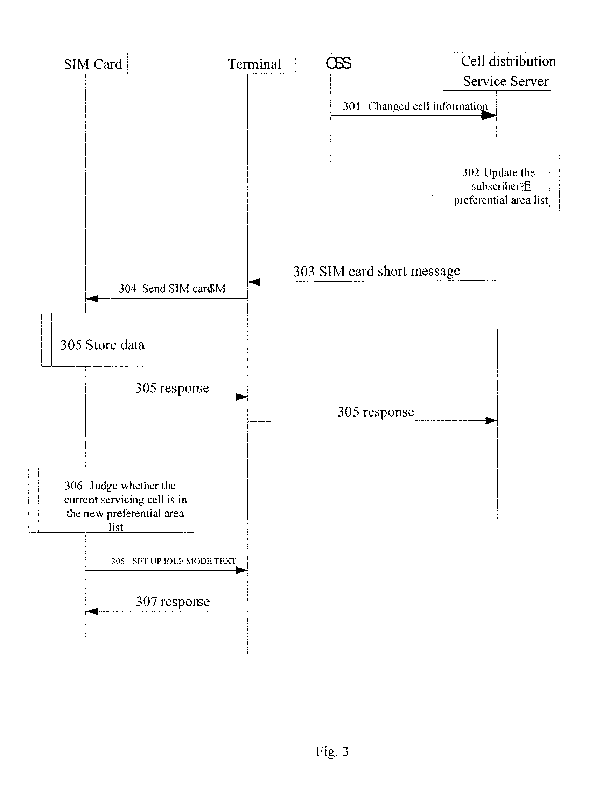

Fig. 3 is a flow of automatically updating a preferential area according to an embodiment of the present invention, which includes steps as follows:
Step 301: When information on preferential cell is changed, for example, the information is added or deleted, an Operational Support Systems (OSS) sends the changed cell information to the cell distribution service server.
Step 302: The cell distribution service server updates the subscriber's preferential area list according to the changed cell information.
Step 303: The cell distribution service server sends the updated preferential area list to the terminal through the SIM card short message.
Step 304: The terminal receives the SIM card short message and forwards to the SIM card.
Step 305: The SIM card stores the new preferential area list, and responds to the cell distribution service server via the terminal.
Step 306: The SIM card acquires information on a current servicing cell, and judges whether the current servicing cell is in the preferential area list. If the current servicing cell is in the preferential area list, the SIM card sends a SET UP IDLE MODE TEXT command to instruct the terminal to display the preference mark.
Step 307: The terminal displays the preference mark, and returns a response message to the SIM card.

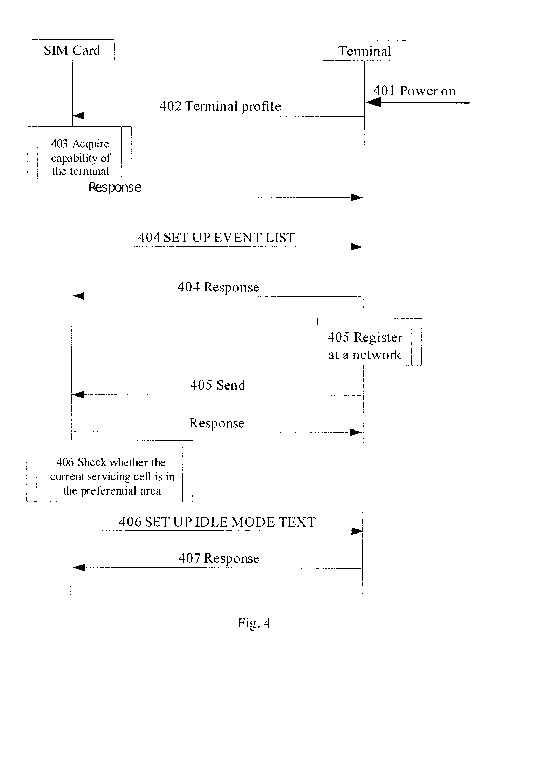

Fig. 4 is a flowchart of power-on process according to an embodiment of the present invention, which includes steps as follows:
Step 401: The subscriber powers on the terminal.
Step 402: The terminal initialize the SIM card, and sends a Terminal Profile to the SIM card.
Step 403: The SIM card acquires the Terminal Profile, and judges from the Terminal Profile whether the terminal has capabilities such as SMS-PP data download, SET UP EVENT LIST, SET UP IDLE MODE TEXT, Location status, and Call Control by SIM.
Step 404: If the SIM cards judges that the terminal supports SET UP EVENT LIST, the SIM card sends a SET UP EVENT LIST command with the EVENT LIST parameter set as "Location status" to the terminal, to instruct the terminal to notify the SIM card whenever the information on the subscriber's current servicing cell is changed.
Step 405: The terminal registers at a network, and sends the information on a current servicing cell to the SIM card through an ENVELOPE (EVENT DOWNLOAD-Location status) command.
Step 406: The SIM card judges whether the current servicing cell is in the preferential area list stored in the SIM card. If the current servicing cell is in the preferential area list, the SIM card sends a SET UP IDLE MODE TEXT command to instruct the terminal to display a preference mark.
Step 407: The terminal displays the preference mark, and returns a response message to the SIM card.

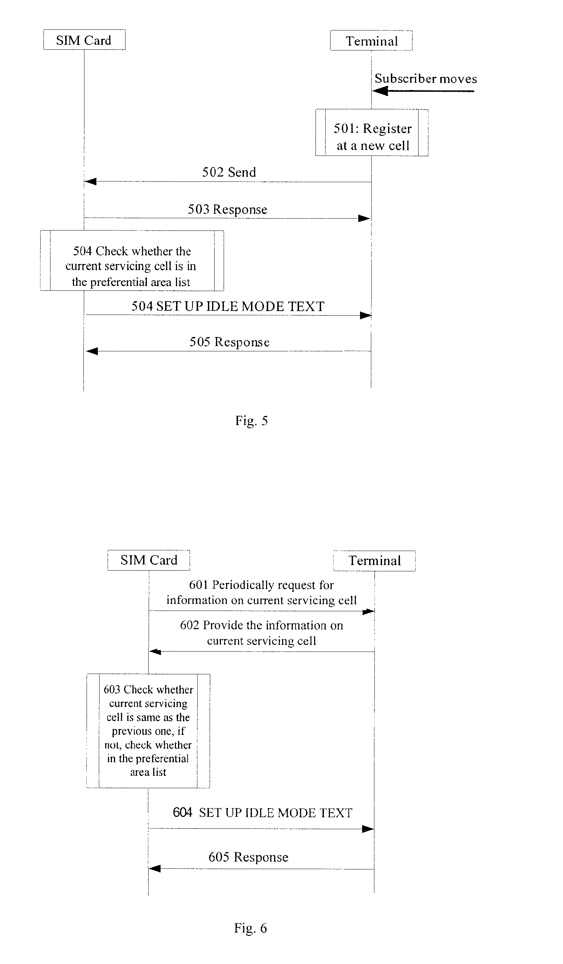

Fig. 5 is a flow of process when a subscriber is moving according to an embodiment of the invention, which includes steps as follows:
Step 501: When a subscriber moves, a terminal used by the subscriber registers at a new servicing cell.
Step 502: When the servicing cell at which the subscriber locates is changed, the terminal sends information on the current servicing cell to the SIM card, in a command format ENVELOPE (EVENT DOWNLOAD-Location status), with the information on a current servicing cell set in a Location information parameter in the ENVELOPE.
Step 503: The SIM card returns a response message to the terminal.
Step 504: The SIM card checks whether the current servicing cell is in the preferential area list. If the current servicing cell is in the preferential area list, the SIM card sends a SET UP IDLE MODE TEXT command to the terminal, carrying texts to be displayed. The texts may be set in a "Text string" parameter. The command may further carry an icon identifier through an "Icon identifier" parameter and for instructing the terminal to display a preference mark on the screen. If the current servicing cell is not in the preferential area list, the SIM card instructs, through the SET UP IDLE MODE TEXT command, the terminal to eliminate the display of the preference mark, or instructs, through the SET UP IDLE MODE TEXT command, the terminal to display a non-preference mark.
Step 505: The terminal displays the preference mark, and returns a response message to the SIM card.

Fig. 6 is a flowchart of another process when the subscriber is moving according to an embodiment of the present invention, which includes steps as follows:
Step 601: The SIM card periodically (e.g., every 10 seconds) sends a PROVIDE LOCAL INFORMATION command to the terminal to acquire information on a current servicing cell.
Step 602: The terminal provides the information on the current servicing cell to the SIM card.
Step 603: The SIM card checks whether the current servicing cell is the same as the previous servicing cell. If the current servicing cell is the same as the previous servicing cell, the SIM card ends the process. If the current servicing cell is different from the previous servicing cell, the SIM card judges whether the new current servicing cell is in a preferential area list.
Step 604: If the new current servicing cell is in the preferential area list, the SIM card sends a SET UP IDLE MODE TEXT command carrying texts to be displayed to the terminal. The texts may be set in a "Text string" parameter. The command may further carry an icon identifier by an "Icon identifier" parameter, for instructing the terminal to display a preference mark on the screen. If the new current servicing cell is not in the preferential area list, the SIM card instructs, through the SET UP IDLE MODE TEXT command, the terminal to eliminate the display of the preference mark, or instructs, through the SET UP IDLE MODE TEXT command, the terminal to display a non-preference mark. The subscriber can judge whether he/she is in a preferential area from the mark displayed on the screen of the terminal.
Step 605: The terminal displays the preference mark, eliminates the preference mark, or displays the non-preference mark, and returns a response message to the SIM card.

Applications of the embodiments of the present invention are further described as follows with respect to two scenarios in which the subscriber acts as a caller or as a callee.

### Scenario 1

The process in which the subscriber acts as a caller is as follows:
Step 11: When a subscriber initiates a call, an originating Mobile Switching Center (MSC) judges whether the subscriber has subscribed to a cell distribution service, and if so, sends a service request carrying information on the subscriber's current servicing cell to a cell distribution service server.
Step 12: The cell distribution service server receives the request, acquires the subscriber's current servicing cell, and judges from the subscriber's preferential area list whether the subscriber is in a preferential area.

A voice alert may be played according to the subscriber's settings. That is, if the subscriber has set a preferential area alarm and the subscriber is in the preferential area, a preference alert may be played. Alternatively, if the subscriber has set a non-preferential area alarm and the subscriber is in a non-preferential area, a non-preference alert may be played.

Step 13: The cell distribution service server instructs a connection.

Step 14: After the call is ended, the cell distribution service server generates a corresponding bill. The bill may be generated for only the call(s) within the preferential area, or for any calls. A preference mark is recorded in the bill.

### Scenario 2

The process in which the subscriber acts as a callee is as follows:
Step 21: When the subscriber answer a call, the originating MSC judges whether the called subscribed has subscribed to a cell distribution service, and if so, sends a service request to a cell distribution service server.
Step 22: The cell distribution service server receives the request, and sends an Any Time Interrogation (ATI) message to a Home Location Register (HLR) of the subscriber.
Step 23: The HLR of the subscriber sends a Provide Subscriber Information (PSI) message to a called visited Mobile Switching Center (MSC).
Step 24: The called visited MSC returns to the HLR a PSI_ACK message carrying information on the subscriber's current servicing cell.
Step 25: The HLR returns to the cell distribution service server an ATI_ACK message carrying the information on the subscriber's current servicing cell.
Step 26: The cell distribution service server acquires the subscriber's current servicing cell, and judges from the subscriber's preferential area list whether the subscriber is in a preferential area.
Step 27: The cell distribution service server instructs a connection.
Step 28: After the call is ended, the cell distribution service server generates a corresponding bill. The bill may be generated for only the call(s) within the preferential area, or for any calls. A preference mark is recorded in the bill.

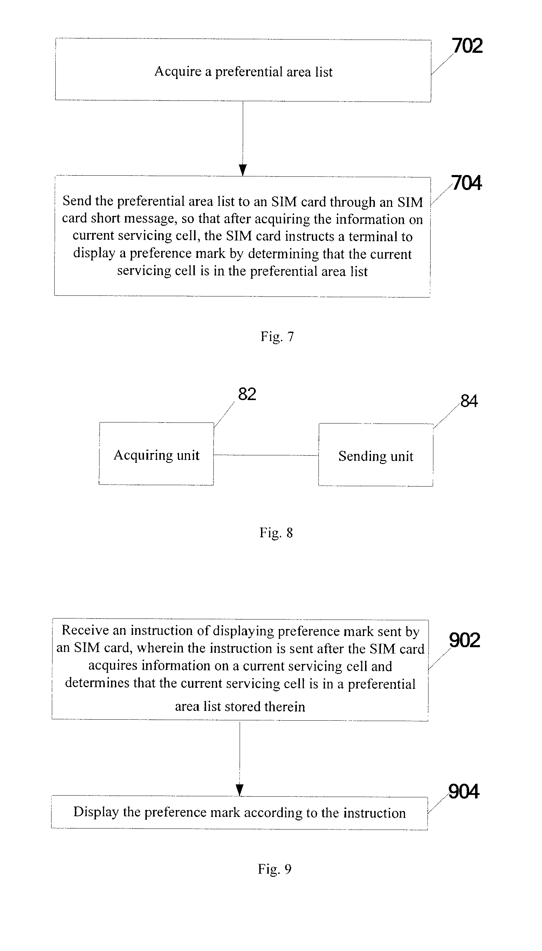

As illustrated in Fig. 7, an embodiment of the invention provides a method for implementing a cell distribution service, which includes steps as follow:
Step 702: Acquire information on preferential area list.

Specifically, the cell distribution service server performs, upon receipt of the request for registering a preferential area which is sent by a subscriber, a location and calculation of the subscriber's preferential area, to acquire the subscriber's preferential area list.

Step 704: Send the preferential area list to an SIM card through an SIM card short message, so that after acquiring the information on a current servicing cell, the SIM card instructs a terminal to display a preference mark by judging that the current servicing cell is in the preferential area list.

Corresponding to the method for implementing a cell distribution service as illustrated in Fig. 7, an embodiment of the invention further provides a cell distribution service server, which, as illustrated in Fig. 8, includes:
an acquiring unit 82 adapted to acquire information on a preferential area list; and
a sending unit 84 adapted to send the preferential area list to an SIM card through an SIM card short message, so that after acquiring the information on a current servicing cell, the SIM card instructs a terminal to display a preference mark by judging that the current servicing cell is in the preferential area list.

As illustrated in Fig. 9, an embodiment of the invention further provides a method for implementing a cell distribution service, which includes the steps as follows:
Step 902: Receive an instruction of displaying preference mark sent by an SIM card, the instruction being sent after the SIM card acquires information on a current servicing cell and judges that the current servicing cell is in a preferential area list stored in the SIM card.
Step 904: Display the preference mark according to the instruction.

The method may further include: sending the information on a current servicing cell to the SIM card when a handover occurs.

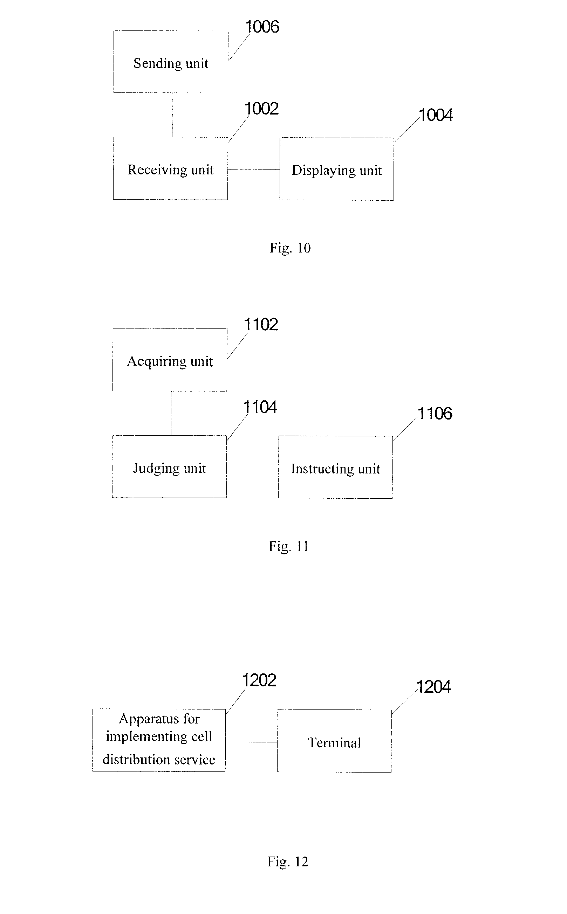

Corresponding to the method as illustrated in Fig. 9, an embodiment of the invention further provides a terminal, which, as illustrated in Fig. 10, includes:
a receiving unit 1002 adapted to receive an instruction of displaying preference mark sent by an SIM card, where the instruction is sent after the SIM card acquires information on a current servicing cell and judges that the current servicing cell is in a preferential area list stored in the SIM card; and
a displaying unit 1004 adapted to display the preference mark according to the instruction.

The terminal may further include a sending unit 1006 adapted to send the information on a current servicing cell to the SIM card when a handover occurs.

Corresponding to the method described above, an embodiment of the present invention further provides an apparatus for implementing a cell distribution service, which may be an SIM card, and as illustrated in Fig. 11, includes:
an acquiring unit 1102 adapted to acquire information on a current servicing cell;
a judging unit 1104 adapted to judge whether the current servicing cell is in a preferential area list stored thereby; and
an instructing unit 1106 adapted to instruct a terminal to display a preference mark if it is judged that the current servicing cell is in the preferential area list.

The instructing unit 1106 may be further adapted to instruct the terminal to display a non-preference mark or eliminate the preference mark if it is judged that the current servicing cell is not in the preferential area list.

Corresponding to the method and apparatus described above, an embodiment of the invention further provides a system for implementing a cell distribution service, which, as illustrated in Fig. 12, includes an apparatus 1202 for implementing a cell distribution service and a terminal 1204 connected to the apparatus.

The apparatus 1202 for implementing a cell distribution service is adapted to acquire information on a current servicing cell, judge whether the current servicing cell is in a preferential area list stored in an SIM card, and if so, instruct the terminal 1204 to display a preference mark.

The terminal 1204 is adapted to display the preference mark according to the instruction from the apparatus 1202 for implementing a cell distribution service.

Further, the apparatus 1202 for implementing a cell distribution service is further adapted to instruct the terminal 1204 to display a non-preference mark or eliminate the preference mark if it is judged that the current servicing cell is not in the preferential area list.

The apparatus 1202 for implementing a cell distribution service may be further adapted to receive and storing a preferential area list sent from a cell distribution service server through an SIM card short message.

The apparatus 1202 for implementing a cell distribution service may be further adapted to receive the information on the current servicing cell sent by the terminal 1204 when a handover occurs.

In addition, functional units in respective embodiments of the invention may be integrated in a processing module, or physically exist individually, or two or more of them may be integrated in a module. The integrated module can be implemented in a form of hardware, or in a form of software functional module. If the integrated module is implemented in a form of software functional module and sold or used as an independent product, it also may be stored in a computer readable storage medium.

The above mentioned storage medium may be a Read-Only Memory (ROM), a magnetic disk, an optical disk, and so on.

The present invention provides method, system and apparatus for implementing a cell distribution service, wherein an SIM card updates a preferential area list in synchronization with the network side: therefore the SIM card can instruct a terminal to display corresponding preference mark when the subscriber enters or leaves a preferential area. In the embodiments of the present invention, it is not necessary to use a dedicated terminal, or make any reconstruction to the terminal; therefore the embodiments of the present invention have many advantages such as wide application, low costs and simple structure.

The method, system, and apparatus for implementing a cell distribution service of the present invention are described in detail as above. Specific examples are employed to describe the principle and embodiments of the present invention; however, the descriptions of the embodiments are for merely facilitating understanding of the invention. Those skilled in the art can make many modifications to the embodiments and applications based on spirit of the invention. Therefore, the description shall be not deemed as a limitation of the present invention.

## Claims

1. A method for implementing a cell distribution service, comprising:
acquiring, by a Subscriber Identity Module (SIM) card, information on a current servicing cell;
judging, by the SIM card, whether the current servicing cell is in a preferential area list stored in the SIM card; and
instructing a terminal to display a preference mark, if it is judged that the current servicing cell is in the preferential area list.

2. The method according to claim 1, further comprising:
instructing the terminal to display a non-preference mark or to eliminate the preference mark if it is judged that the current servicing cell is not in the preferential area list.

3. The method according to claim 1 or 2, further comprising:
receiving and storing a preferential area list sent by a cell distribution service server through an SIM card short message.

4. The method according to claim 1 or 2, further comprising:
receiving an updated preferential area list sent by the cell distribution service server through the SIM card short message,
wherein judging, by the SIM card, whether the current servicing cell is in the preferential area list stored in the SIM card further comprises:
judging, by the SIM card, whether the current servicing cell is in the updated preferential area list.

5. The method according to claim 1 or 2, wherein acquiring the information on the current servicing cell further comprises:
receiving, by the SIM card, the information on the current servicing cell sent by the terminal, when a handover occurs; or
sending, by the SIM card, a request periodically to the terminal for acquiring the information on the current servicing cell; or
receiving, by the SIM card, the information on the current servicing cell sent by the terminal when the terminal registers at a network.

6. The method according to claim 5, wherein if the SIM card sends the request periodically to the terminal for acquiring the information on the current servicing cell, the method further comprises:
checking, by the SIM card, whether the current servicing cell is the same as a previous servicing cell, and if the current servicing cell is different form a previous servicing cell, judging whether the current servicing cell is in the preferential area list stored in the SIM card.

7. The method according to claim 5, wherein if the SIM card receives the information on the current servicing cell sent by the terminal when a handover occurs, the method further comprises:
interacting, by the SIM card, with the terminal to acquire a profile of the terminal, and instructing, if it is judged from the profile that the terminal is capable of setting an event list, the terminal to send the information on the current servicing cell to the SIM card whenever a handover occurs.

8. A method for implementing a cell distribution service, comprising:
receiving an instruction of displaying a preference mark sent by an SIM card, wherein the instruction is sent after the SIM card acquires information on a current servicing cell and judges that the current servicing cell is in a preferential area list stored in the SIM card; and
displaying the preference mark according to the instruction.

9. The method according to claim 8, further comprising:
sending the information on the current servicing cell to the SIM card when a handover occurs.

10. A method for implementing a cell distribution service, comprising:
acquiring a preferential area list; and
sending the preferential area list to an SIM card through an SIM card short message, so that the SIM card instructs a terminal to display a preference mark after acquiring information on a current servicing cell and judging that the current servicing cell is in the preferential area list.

11. An apparatus for implementing a cell distribution service, comprising:
an acquiring unit adapted to acquire information on a preferential area list;
a judging unit adapted to judge whether the current servicing cell is in a preferential area list stored in an SIM card; and
an instructing unit adapted to instruct a terminal to display a preference mark when it is judged that the current servicing cell is in the preferential area list.

12. The apparatus according to claim 11, wherein the instructing unit is further adapted to instruct the terminal to display a non-preference mark or to eliminate the preference mark when it is judged that the current servicing cell is not in the preferential area list.

13. A terminal, comprising:
a receiving unit adapted to receive an instruction of displaying preference mark sent by an SIM card, wherein the instruction is sent after the SIM card acquires information on a current servicing cell and judges that the current servicing cell is in a preferential area list stored in the SIM card; and
a displaying unit adapted to display the preference mark according to the instruction.

14. The terminal according to claim 13, further comprising:
a sending unit adapted to send the information on the current servicing cell to the SIM card when a handover occurs.

15. A cell distribution service server, comprising:
an acquiring unit adapted to acquire a preferential area list; and
a sending unit adapted to send the preferential area list to an SIM card through an SIM card short message, so that the SIM card instructs a terminal to display a preference mark after acquiring information on a current servicing cell and judging that the current servicing cell is in the preferential area list.

16. A system for implementing a cell distribution service, comprising an apparatus for implementing a cell distribution service and a terminal connected to the apparatus, wherein
the apparatus for implementing a cell distribution service is adapted to acquire information on a current servicing cell, judge whether the current servicing cell is in a preferential area list stored in an SIM card, and if so, instruct the terminal to display a preference mark; and
the terminal is adapted to display the preference mark according to the instruction from the apparatus for implementing a cell distribution service.

17. The system according to claim 16, wherein the apparatus for implementing a cell distribution service is further adapted to instruct the terminal to display a non-preference mark or to eliminate the preference mark if it is judged that the current servicing cell is not in the preferential area list.

18. The system according to claim 16 or 17, wherein the apparatus for implementing a cell distribution service is further adapted to receive and store a preferential area list sent by a cell distribution service server through an SIM card short message.

19. The system according to claim 18, wherein the apparatus for implementing a cell distribution service is further adapted to receive the information on the current servicing cell sent by the terminal, when a handover occurs.
